# EUROPEAN PATENT SPECIFICATION

(11) **EP 1 302 513 B1**
(45) Date of publication and mention of the grant of the patent: **23.01.2008**
(21) Application number: 02022840.9
(22) Date of filing: 14.10.2002
(51) Int. Cl.: C08L 89/06, B08B 15/02, B09B 3/00

(54) **Method of Application of a composition to a surface**
Verfahren zum Aufbringen einer Zusammensetzung auf eine Oberfläche
Méthode d'application d'une composition sur une surface

(30) Priority: 15.10.2001 GB 0124603
(43) Date of publication of application: 16.04.2003
(73) Proprietor: Careful Times Limited, Harrogate, HG1 1HR (GB)
(72) Inventor: Eastwood, Martin, Harrogate, HG1 1HR (GB)
(74) Representative: Wood, Graham

(56) References cited:
- CH-A- 257 408
- DE-A- 4 015 488
- DE-C- 4 244 099
- US-A- 1 902 304
- US-A- 2 001 422
- US-A- 4 908 068
- DATABASE WPI Week 199213 Derwent Publications Ltd., London, GB; AN 1992-102831 XP002226181 "Removing asbestos layer from e.g. roof or wall plate - by applying wet aq. soln. onto asbestos layer before film is dried." & JP 04 049377 A (NIPPON STEEL CHEM CO), 18 February 1992 (1992-02-18)
- DATABASE WPI Week 198926 Derwent Publications Ltd., London, GB; AN 1989-190720 XP002226182 "Stripping of asbestos and sealant for it - comprises impregnating outer wall with sealant comprising water soluble polymer and gelling agent, and mechanically removing gelled layer." & JP 01 131085 A (YAYOIKAGAKU KOGYO KK), 23 May 1989 (1989-05-23)

## Description

This invention relates to a method of spraying, painting or otherwise applying a composition to a surface on which a material coating, cladding or other secondary layer is provided and which is desired to be removed safely and without requiring a significant further cleaning operation after said material coating has been separated from the surface to which it was originally applied. Additionally, this invention relates to the provision of a method of applying a composition to a surface having a material coating thereon to impregnate the coating to a sufficient degree to soften the same and/or reduce the effort required to subsequently remove the material coating.

The invention has particular application to the removal of asbestos, but the method hereinafter described has been found to be useful in the removal of Artex®, which is well known in the interior decoration, office and domestic refurbishment industries as being particularly difficult to remove. This is on account of the fact that this substance dries as a solid cake on walls and ceilings and is to a large extent impregnable thereafter. However, the use of the composition of the present invention is not to be considered as limited to these particular uses, even although the following description is provided with almost exclusive reference to the removal of asbestos cladding and fibres from within buildings.

The detrimental effects of asbestos and asbestos fibres on the health of humans is well documented. If inhaled by humans, asbestos fibres can cause asbestosis, lung cancer and mesothelioma, a disease which is invariably fatal, and accordingly the use of asbestos in modern construction has been prohibited for many years.

However, in buildings erected prior to the imposition of the prohibition abovementioned in practically every country of the world, asbestos, usually in the form of fibrous sheets, was used extensively if not ubiquitously in the construction industry to provide buildings with a degree of fire retardance. It is indisputed from a physical assessment of this naturally occurring mineral that it possesses extremely useful properties, not least of which are that it can be woven, carded, or spun as any conventional fibre and that its propensity to withstand heat is enormous. For the information of the reader, it is estimated that at its peak in the 1970s, asbestos was mined in amounts greater than 4 million tonnes per annum.

One of the main reasons why asbestos is so detrimental to the health of humans is a factor of the very resilience which renders the material so useful. Asbestos fibres are eminently respirable and such is the indestructible nature of these fibres, once inhaled they cause severe damage. Accordingly, on account of the fact that so many millions of existing buildings were constructed before the health risks of asbestos and its use were fully appreciated, and that the destruction of such buildings necessary involves the disintegration of the asbestos layers within the building, and thus the release of potentially billions of asbestos fibres, a safe and economical approach to the removal of the asbestos prior to the demolition of the building is required. Furthermore, any procedure must prevent the inhalation of fibres by the humans conducting the procedure, and it is with this object that the composition of the present invention is ideally suited.

Asbestos sheets or boards are prone to disintegration whenever they are disturbed, and therefore a fundamental requirement of the majority of asbestos removal procedures is that both a negative pressure differential be applied in the workspace where the removal is being carried out and that the asbestos is soaked or at least rendered substantially wet prior to and during the removal.

In this regard, it is common practice to spray existing asbestos sheets with a large quantity of water to ensure that the fibres are soaked and therefore unlikely to become airborne during any scraping or other technique used for removing the asbestos from walls, ceilings, pipework and/or the like. The resulting sludge or slurry of asbestos and water which usually falls to the floor during the removal must then be swept or otherwise gathered and deposited in secure containers for transportation and safe destruction or burial.

US 4908068 describes a method of removing layers of asbestos by impregnating them with a galantinous composition.

One of the fundamental disadvantages of using water to soak the asbestos is its propensity to evaporate leaving dry asbestos fibres, which can then become airborne if disturbed. Accordingly, it is necessary to ensure that any asbestos/water sludge is continually dowsed to ensure that as few fibres as possible dry. This can represent a significant burden on those carrying out the procedure, especially in warm confined spaces.

It is an object of this invention to provide a method of applying a composition to a material coating, cladding or other secondary layer in front of a base surface when it is desired to remove said coating safely and without requiring any continual or repetitive soaking thereof after a first application of said composition.

It is a further object of this invention to provide a method of applying a composition which acts to encapsulate particles or fibres of the material being removed from the base surface during the removal process.

It is a further object of this invention to provide a method of applying a composition which impregnates and/or otherwise soaks a secondary material coating, cladding or skin which covers a base surface and which facilitates the easy sweeping and subsequent removal of the soaked material after having been scraped, scrubbed, torn or otherwise detached from said base surface.

According to a first aspect of the present invention there is provided a method of removing an impregnatable secondary layer of material from a base or primary layer, said secondary layer being more easily or safely removable from said base layer when wet and characterised in that said method includes the steps of heating a substantially gelatinous composition including white oil to a temperature of approximately 60°C to render said composition non-gelatinous, spraying or brushing said composition to said secondary layer and allowing said composition to soak into said secondary layer of material, thereafter forcibly separating said soaked secondary layer of material from said base layer.

Preferably the white oil is technical white oil.

In a preferred embodiment the technical white oil used in the composition is stainless oil. The stainless oil is typically stainless sewing machine oil (also known as knitting oil commonly available in the UK).

Preferably, the mixture additionally includes one or more metal Sorbate salts which act as preservatives to prevent the degradation of gelatin over time. In a preferred embodiment the one or more metal sorbate salts is or includes potassium sorbate.

Ideally the composition of the mixture is Gelatin (230B) 2%, potassium sorbate 2%, and 20ml stainless oil/white oil for each litre of composition, the remainder being made up of water. The values are only approximate and up to 1% more gelatin can be included in the mixture to provide the function of the present invention.

The reference associated with the Gelatin component identifies the particular "bloom" or strength of the gelatin-for example it is possible to use a 100 Bloom gelatin, but in such case, more than twice as great a quantity would be required as compared to the 230 Bloom. For example, the mixture can contain Gelatin (100B) 4%, potassium sorbate 2%, and 20ml stainless oil for each litre of composition, the remainder being made up of water.

Preferably, the proportions of the constituents of the mixture are such that it becomes liquid above room temperature so as to be capable of being easily applied, either by spraying or possibly brushing.

The composition is heated to approximately 60 °C prior to being applied to a surface which requires removal. The composition can be heated using a conventional heating element, in a microwave, using a heating blanket and/or the like.

Preferably the material being removed is asbestos sheet, board, and/or cladding.

Alternatively, the material being removed may be Artex®.

Yet further alternatively the composition described above may be used in the prevention of dust accumulation which has been identified as a potential fire risk and may even present a risk of explosion.

It is preferred that either a sachet of dried composition may be provided to which water is added to make the composition, or alternatively the composition may be purchased pre-mixed in 25 litre drums.

Once the composition has soaked into the secondary layer, a conventional scraping device, such as a decorators scraping tool can be used to remove the secondary layer from the base or primary layer.

The composition used in the present invention works because the gelatin and oil of the mixture act together to prevent particles or fibres of the material being removed from either becoming dry through evaporation or from becoming airborne. This is by virtue of the fact that as the liquid composition cools from the temperature at which it was applied to the material layer, it tends to coagulate as its gelatinous characteristic returns, and in doing so the particles or fibres become encapsulated or surrounded in a film of the composition. The additional weight of the gelatinous film surrounding the particles not only prevents such from becoming airborne, but also the tendency of such encapsulated particles to act as globules and thus adhere to one another renders the cleaning operation, after the removal of the soaked secondary material from the base layer, significantly easier.

Specifically, the composition significantly reduces the number of puddles which are created as a result of simply spraying water onto the secondary layer of material to be removed. In addition, the composition reduces the time required for removal of the secondary layer of material.

From a practical viewpoint, the composition may be applied through a conventional pressure washer provided with a tank having suitable heating means attached thereto.

For the purposes of completeness, the following description is provided for the reader to fully identify the nature of so-called stainless oil.

Stainless sewing machine oil is a pure white mineral oil (also called medicinal white oil) with rather low viscosity, refined to such an extremely high degree that it is suitable for internal medicinal use. In respect of purity this oil meets the requirements of all International Pharmacopoeias. Moreover it meets the requirements of the food industry in various countries, such as the Food and Drug Administration (FDA §172.87). Lebensmittelgasetz etc.

### APPLICATION

In addition to medicinal, pharmaceutical and veterinary uses, GB stainless sewing machine oil is used in all sorts of cosmetic preparations, as lubricant, polisher and preservative in the food industry; as processing oil in the plastics industry; as softener in the textile dressings; as basic oil for rayon oil and emulsifiable and washable oils in textiles; as catalyst carrier; as softener and compressor oil in the plastic industry, etc.

### SPECIFICATION

| | | Limits | Typicals |
|---|---|---|---|
| Density at 20°C, kg/m² | ASTM D 1298 | 830-850 | 837 |
| Viscosity at 40°C, mm²/s | ASTM D 445 | 10-14 | 12.5 |
| Viscosity at 100°C, mm²/s | ASTM D 445 | 2-4 | 3.4 |
| Flash Point, "C | ASTM D 92 | min 165 | 175 |
| Pour Point, "C | ASTM D 97 | max -6 | -9 |
| Colour Sayboit | | +30 | +30 |
| Odour and Taste | | none | none |
| Carbonizable Substances | All Pharm | pass | pass |
| UV Absorbance | All Pharm | pass | pass |
| Polycyclic Aromatic | | | |
| Hydrocarbons | | | |
| (Polynuclear Compounds) | USP/NF/EUP | pass | pass |

### TYPICAL PROPERTIES

| | | |
|---|---|---|
| Viscosity at 20°C, mPs.s | ASTM D 445 | 22 |
| Viscosity at 20°C, mm²/s | ASTM D 445 | 25 |
| Viscosity at 37.8°C, SUB | ASTM D 445 | 70 |
| (100°F) | USP/NF/EUP | pass |
| Neutrality | USP/NF/EUP | pass |

## Claims

1. A method of removing an impregnatable secondary layer of material from a base or primary layer, said secondary layer being more easily or safely removable from said base layer when wet and **characterised in that** said method includes the steps of heating a substantially gelatinous composition including white oil to a temperature of approximately 60°C to render said composition non-gelatinous, spraying or brushing said composition to said secondary layer and allowing said composition to soak into said secondary layer of material, thereafter forcibly separating said soaked secondary layer of material from said base layer.

2. A method according to claim 1 **characterised in that** the white oil is technical white oil.

3. A method according to claim 1 **characterised in that** the white oil is stainless oil.

4. A method according to claim 1 **characterised in that** the material being removed is asbestos sheet, board and/or cladding.

5. A method according to claim 1 **characterised in that** the material being removed is Artex®.

6. A method according to claim 1 **characterised in that** the composition is mixed with water prior to application to the material layer.

7. A method according to claim 1 **characterised in that** the composition is substantially gelatinous at room temperature.

8. A method according to claim 1 **characterised in that** the composition additionally includes one or more metal sorbate salts.

9. A method according to claim 8 **characterised in that** the one or more metal sorbate salts include potassium sorbate.

10. A method according to claim 1 **characterised in that** the proportions of constituents of the composition are such that the composition becomes liquid above room temperature.

## Patentansprüche

1. Verfahren zum Entfernen einer imprägnierbaren Sekundärschicht eines Materials von einer Grund- oder Primärschicht, wobei sich die genannte Sekundärschicht im nassen Zustand leichter oder sicherer von der genannten Grundschicht entfernen lässt, **dadurch gekennzeichnet, dass** das genannte Verfahren die folgenden Schritte beinhaltet: Erhitzen einer im Wesentlichen gelatinösen, Weißöl enthaltenden Zusammensetzung auf eine Temperatur von etwa 60°C, um die genannte Zusammensetzung nichtgelatinös zu machen, Aufsprühen oder Aufstreichen der genannten Zusammensetzung auf die genannte Sekundärschicht und Eindringenlassen der genannten Zusammensetzung in die genannte Sekundärschicht des Materials, danach zwangsweises Ablösen der genannten eingedrungenen Sekundärschicht des Materials von der genannten Grundschicht.

2. Verfahren nach Anspruch 1, **dadurch gekennzeichnet, dass** das Weißöl technisches Weißöl ist.

3. Verfahren nach Anspruch 1, **dadurch gekennzeichnet, dass** das Weißöl fleckenfreies Öl ist.

4. Verfahren nach Anspruch 1, **dadurch gekennzeichnet, dass** das entfernte Material Asbestbleche, -platten und/oder -plattierung ist.

5. Verfahren nach Anspruch 1, **dadurch gekennzeichnet, dass** das das entfernte Material Artex® ist.

6. Verfahren nach Anspruch 1, **dadurch gekennzeichnet, dass** die Zusammensetzung vor dem Aufbringen auf die Materialschicht mit Wasser gemischt wird.

7. Verfahren nach Anspruch 1, **dadurch gekennzeichnet, dass** die Zusammensetzung bei Raumtemperatur im Wesentlichen gelatinös ist.

8. Verfahren nach Anspruch 1, **dadurch gekennzeichnet, dass** die Zusammensetzung zusätzlich ein oder mehrere Metallsorbatsalze enthält.

9. Verfahren nach Anspruch 8, **dadurch gekennzeichnet, dass** die ein oder mehreren Metallsorbatsalze Kaliumsorbat beinhalten.

10. Verfahren nach Anspruch 1, **dadurch gekennzeichnet, dass** die Bestandteilproportionen der Zusammensetzung so sind, dass die Zusammensetzung über Raumtemperatur flüssig wird.

## Revendications

1. Méthode d'enlèvement d'une seconde couche imprégnable de matériau placée sur une couche de fond ou d'apprêt, ladite couche secondaire pouvant être enlevée de ladite couche de fond plus facilement ou avec moins de risque lorsque mouillée, et **caractérisée en ce que** ladite méthode comprend les étapes consistant à chauffer, jusqu'à une température de 60°C environ, une composition sensiblement gélatineuse comprenant de l'huile claire pour rendre la composition non gélatineuse, à appliquer par pulvérisation ou au pinceau ladite composition sur ladite couche secondaire, et à laisser ladite composition imprégner ladite seconde couche de matériau, puis à séparer par force ladite seconde couche de matériau imprégnée de ladite couche de fond.

2. Méthode selon la revendication 1, **caractérisée en ce que** l'huile blanche est une huile blanche à usage technique.

3. Méthode selon la revendication 1, **caractérisée en ce que** l'huile blanche est une huile à broches spéciale.

4. Méthode selon la revendication 1, **caractérisée en ce que** le matériau à enlever est de l'amiante en plaque, du carton d'amiante et/ou un bardage en amiante.

5. Méthode selon la revendication 1, **caractérisée en ce que** le matériau à enlever est de l'Artex®.

6. Méthode selon la revendication 1, **caractérisée en ce que** la composition est mélangée avec de l'eau avant d'être appliquée à la couche de matériau.

7. Méthode selon la revendication 1, **caractérisée en ce que** la composition est sensiblement gélatineuse à la température ambiante.

8. Méthode selon la revendication 1, **caractérisée en ce que** la composition comprend de plus un sel métallique d'acide sorbique, ou davantage.

9. Méthode selon la revendication 8, **caractérisée en ce que** le (les) sel(s) métallique(s) d'acide sorbique inclue(nt) le sorbate de potassium.

10. Méthode selon la revendication 1, **caractérisée en ce que** les proportions des éléments constitutifs de la composition sont tels que la composition se liquéfie au-dessus de la température ambiante.
